# EUROPÄISCHE PATENTSCHRIFT

(11) **EP 4 123 396 B1**
(45) Veröffentlichungstag und Bekanntmachung des Hinweises auf die Patenterteilung: **17.09.2025**
(21) Anmeldenummer: 22185736.0
(22) Anmeldetag: 19.07.2022
(51) Int. Cl.: G05B 19/042

(54) **TECHNIK ZUR REALISIERUNG EINER VISUALISIERUNG FÜR EINE AUTOMATISIERUNGSTECHNISCHE ANLAGE MIT EINER SPEICHERPROGRAMMIERBAREN STEUERUNG**
TECHNIQUE FOR IMPLEMENTING VISUALIZATION FOR AN AUTOMATION SYSTEM WITH A PROGRAMMABLE CONTROLLER
TECHNIQUE DESTINÉE À LA RÉALISATION D'UNE VISUALISATION POUR UNE INSTALLATION TECHNIQUE D'AUTOMATISATION DOTÉE D'UNE COMMANDE À MÉMOIRE PROGRAMMABLE

(30) Priorität: 23.07.2021 DE 102021119116
(43) Veröffentlichungstag der Anmeldung: 25.01.2023
(73) Patentinhaber: PHOENIX CONTACT GmbH & Co. KG, 32825 Blomberg (DE)
(72) Erfinder: Lange, Andreas, 31737 Rinteln (DE); Würger, Andreas, 30853 Langenhagen (DE)
(74) Vertreter: LifeTech IP Spies & Behrndt Patentanwälte PartG mbB

(56) Entgegenhaltungen:
- US-B2- 11 048 483
- JOHN ASHA ET AL: "Automation of 11 kv substation using raspberry pi", 2017 INTERNATIONAL CONFERENCE ON CIRCUIT ,POWER AND COMPUTING TECHNOLOGIES (ICCPCT), IEEE, 20 April 2017 (2017-04-20), pages 1 - 5, XP033228976, DOI: 10.1109/ICCPCT.2017.8074264
- 3S - SMART SOFTWARE SOLUTIONS GMBH: "CoDeSys Visualization Supplement to the User Manual for PLC Programming with CoDeSys 2.3", 17 December 2007 (2007-12-17), Kempten, XP055560441, Retrieved from the Internet <URL:https://crosscontrol.com/media/nyzg5ozx/codesys_visu_v23_e.pdf> [retrieved on 20190221]
- JAMRO MARCIN ET AL: "IEC 61131-3 programmable human machine interfaces for control devices", 2013 6TH INTERNATIONAL CONFERENCE ON HUMAN SYSTEM INTERACTIONS (HSI), IEEE, 6 June 2013 (2013-06-06), pages 48 - 55, XP032475672, ISSN: 2158-2246, ISBN: 978-1-4673-5635-0, [retrieved on 20130809], DOI: 10.1109/HSI.2013.6577801

## Beschreibung

Die Erfindung betrifft eine Technik zur Realisierung einer Visualisierung für eine, mindestens eine speicherprogrammierbare Steuerung umfassende, automatisierungstechnische Anlage.

Eine speicherprogrammierbare Steuerung (SPS, englisch: programmable logic controller, PLC) ist ein Gerät, das zur Steuerung oder Regelung einer Maschine oder Anlage eingesetzt und auf digitaler Basis programmiert wird. Derartige Maschinen oder Anlagen mit mindestens einer SPS werden nachfolgend als automatisierungstechnische Anlage bezeichnet. Zur Programmierung der SPS sind aus der Praxis eine Vielzahl unterschiedlicher SPS-Engineering-Werkzeuge und Frameworks bekannt.

Die Europäische Norm EN 61131, die auf der internationalen Norm IEC 61131 basiert, befasst sich mit den Grundlagen speicherprogrammierbarer Steuerungen. Die Norm IEC 61131-3 (auch DIN EN 61131-3) ist ein internationaler Standard für Programmiersprachen von SPSen. Ihr Ziel besteht in der Standardisierung der Programmierung der Steuerungssoftware für SPSen. Dabei sollen Programmiersprachen herstellerunabhängig in einem einheitlichen Organisationskonzept (POE - Programm-Organisationseinheiten) mit der Pflicht zur Variablendeklaration unter Verwendung von elementaren und abgeleiteten Datentypen angewendet werden. Die Norm EN 661131-3 legt die Syntax und Semantik einer vereinheitlichten Reihe von Programmiersprachen für speicherprogrammierbare Steuerungen (SPS) fest.

Neben der Programmierung der SPS zur Steuerung der automatisierungstechnischen Anlage gehört es zu den Aufgaben des entsprechenden Technikers, eine zweckmäßige Gestaltung der Visualisierung zu erstellen, z. B. zur Gestaltung der Mensch-Maschinen-Schnittstelle der automatisierungstechnischen Anlage bzw. zur Visualisierung des Steuerungsvorgangs der SPS.

M. Jamro et al.: "IEC 61131-3 programmable human machine interfaces for control devices", 2013 6TH INTERNATIONAL CONFERENCE ON HUMAN SYSTEM INTERACTIONS (HSI); IEEE, 6. Juni 2013, Seiten 48-55, XP032475672, ISSN: 2158-2246, DOI: 10.1109/HSI.2013.6577801, ISBN: 978-1-4673-5635-0) beschreibt eine programmierbare Mensch-Maschine-Schnittstelle (HMI) nach IEC 61131-3 für Steuergeräte.

Patentdokument US 11 048 483 B2 beschreibt eine industrielle integrierte Entwicklungsumgebung (IDE), die offene oder erweiterbare Anwendungsprogrammierschnittstellen (APIs) unterstützt, die es Endbenutzern ermöglichen, auf der Entwicklungsplattform der IDE aufzubauen, um benutzerdefinierte Ansichten zu erstellen oder benutzerdefinierte Funktionen zu programmieren.

A. John et al.: "Automation of 11 kV substation using Raspberry Pi", 2017 INTERNATIONAL CONFERENCE ON CIRCUITS; POWER AND COMPUTING TECHNOLOGIES (ICCPCT), IEEE, 20. April 2017, Seiten 1-5, DOI: 10.1109/ICCPCT, beschreibt Automatisierungslösungen auf Basis der IOT-Technologie unter Verwendung eingebetteter Prozessoren wie Raspberry Pi für die Automatisierung eines kleinen 11-kV-Umspannwerks.

Eine Publikation der 3S - Smart Software Solutions GmbH mit dem Titel "CoDeSys Visualization Supplement to the User Manual for PLC Programming with CoDeSys 2.3", 17. Dezember 2007 (2007-12-17), Kempten) umfasst ein Benutzerhandbuch für die SPS-Programmierung mit CoDeSys.

Hinsichtlich Visualisierungen für automatisierungstechnische Anlagen mit SPSen sind aus der Praxis unterschiedliche Ansätze bekannt.

Ein erster bekannter Ansatz zeichnet sich dadurch aus, dass die Visualisierungen für automatisierungstechnische Anlagen mit SPSen als Web-Visualisierung realisiert wird, die auf einem in die SPS integrierten Webserver laufen und über einen Web-Browser als Webseite aufgerufen werden. Derartige Visualisierungen werden mit einer speziellen Visualisierungssoftware, die auch in das SPS-Engineering-Werkzeug selbst integriert sein kann, entwickelt und mit den Prozessdaten aus den SPSen verknüpft. Als Technologien zum Einbetten der Visualisierung in eine Webseite werden heute entweder HTML5 oder Java genutzt.

Die Web-Visualisierung hat folgende Nachteile: Die Anzeige ist abhängig vom verwendeten Web-Browser. Dies erhöht die Entwicklungsaufwände, falls alle denkbaren Web-Browser unterstützt werden sollen oder erhöht das Risiko, dass die Visualisierung nicht oder anders dargestellt wird. Zudem können Sicherheitsfunktionen der Web-Browser einzelnen Funktionen blockieren. Ein weiterer Nachteil der Web-Visualisierung ist, dass die Visualisierung ausschließlich SPS-bezogen ist, es können also in einer Visualisierung nur Daten aus einer SPS angezeigt werden. Ferner werden zwei verschiedene Engineering-Verfahren eingesetzt, nämlich für die SPS-Programmerstellung (Programmieren in IEC-61131-Sprachen) einerseits und für die Erstellung der Visualisierung (Zeichnen der Visualisierung mit einem grafischen Editor) andererseits. Dieses Problem tritt auch dann auf, wenn das Visualisierungswerkzeug für die Web-Visualisierung in das SPS-Engineering-Werkzeug selbst integriert ist

Ein zweiter bekannter Ansatz zeichnet sich dadurch aus, dass die Visualisierung in einer entsprechenden Software-Laufzeitumgebung läuft. Auch derartige Visualisierungen werden mit einer speziellen Visualisierungssoftware entwickelt. Die Verknüpfung mit den Prozessdaten aus den SPSen erfolgt über Kommunikationstechnologien wie z. B. OPC UA, über welche Visualisierung und SPS Daten austauschen.

Eine derartige Visualisierung hat folgende Nachteile: Die Visualisierung läuft üblicherweise auf einem eigenen Visualisierungsrechner, und der Zugriff von anderen Geräten ist umständlich z. B. durch Remote-Desktopverbindungen. Es werden auch hier zwei verschiedene Engineering-Verfahren für die SPS-Programmerstellung (Programmieren in IEC-61131-Sprachen) und für die Erstellung der Visualisierung (Zeichnen der Visualisierung mit einem grafischen Editor) benötigt. Entsprechend werden zwei separate Engineering-Werkzeuge für die SPS-Programmerstellung und für die Erstellung der Visualisierung benötigt. Üblicherweise sind Programme zum Erstellen derartiger Visualisierungen komplex und benötigen eine umfassende Einarbeitung.

Ein dritter bekannter Ansatz zeichnet sich dadurch aus, dass die Visualisierungen als Computeranwendung eigens in einer Hochsprache entwickelt wird. Derartige Visualisierungen werden speziell für eine Anlage entwickelt. Dies ist nur sinnvoll bei in hohen Stückzahlen produzierten Anlagen. Die Verknüpfung mit den Prozessdaten aus den SPSen erfolgt über Kommunikationstechnologien wie z. B. OPC UA, über welche Visualisierung und SPS Daten austauschen. Eine derartige Visualisierung hat folgende Nachteile: Die Visualisierung läuft üblicherweise auf einem eigenen Visualisierungsrechner, und der Zugriff von anderen Geräten ist umständlich, z. B. durch Remote-Desktopverbindungen. Die Visualisierung ist ein eigenständiges Computerprogramm, welches in einer Hochsprache entwickelt wurde, hierfür wird ein hoher zusätzlicher Engineering-Aufwand in Form von Hochsprachenentwicklung benötigt.

Es ist eine daher Aufgabe der Erfindung, eine verbesserte Technik zur Realisierung einer Visualisierung für eine, mindestens eine speicherprogrammierbare Steuerung, SPS, umfassende, automatisierungstechnische Anlage bereitzustellen, mit der Nachteile herkömmlicher Ansätze vermieden werden können. Die Aufgabe der Erfindung ist es insbesondere, eine solche Technik zur Realisierung einer Visualisierung bereitzustellen, die eine vereinfachte Erstellung der Visualisierung und einen flexibleren Einsatz der erstellten Visualisierung ermöglicht.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

In diesem Dokument werden die Begriffe "Visualisierung" und "IEC-61131-Framework" wie folgt verstanden:
Unter einer Visualisierung wird hier eine programmtechnische (softwaretechnisch) erzeugte, computerimplementierte Mensch-Maschine-Schnittstelle für automatisierungstechnische Anlagen bzw. deren SPS verstanden. Die Visualisierung zeigt eine Benutzerschnittstelle und kann zur Maschinenbedienung, Diagnose, Überwachung und/oder Fernwartung der automatisierungstechnischen Anlage oder deren SPS verwendet werden.

Unter dem Begriff IEC-61131-Framework wird vorliegend ein Programmiergerüst verstanden, das für den Softwareentwickler einer Visualisierung einen vorprogrammierten Rahmen bereitstellt, innerhalb dessen dieser eine anwendungsspezifische zu der Norm IEC 61131-3 konforme Programmierung der Visualisierung und vorzugsweise auch des Steuerungsprogramms der SPS erstellen kann. Ein derartiges Framework wird in der Praxis und in diesem Dokument auch als Programmiergerüst zur Erstellung einer Visualisierung für eine, mindestens eine speicherprogrammierbare Steuerung, SPS, umfassende, automatisierungstechnische Anlage bezeichnet. Ein solches Framework (Programmiergerüst) ist und/oder umfasst ein Sammlungen von Codestücken, vorgefertigten Programmgerüsten, Funktionen, Funktionsbausteinen, etc. mit denen eine Programmieraufgabe schneller gelöst werden kann.

Ein derartiges Framework stellt somit mit anderen Worten ein Programmiergerüst dar, für die Erstellung von Visualisierung und vorzugsweise auch für die Applikationsentwicklung für SPSen allgemein. Einzelne Funktionen, Elemente und Bausteine sind bereits im Framework (Programmiergerüst) enthalten oder vorprogrammiert, die in diesem Dokument als Funktionsbausteine bezeichnet sind, und müssen deshalb nicht immer wieder neu programmiert werden und können bei der Entwicklung verschiedenster Visualisierungen wiederverwendet werden. Das vereinfacht die Arbeit des Programmierers nachhaltig und verbessert den Nutzen, die Effizienz, Schnelligkeit, Fehlerfreiheit, und Qualität etc.

Ein Grundgedanke der vorliegenden Erfindung besteht darin, eine ganzheitliche Visualisierungstechnik bereitzustellen, bei der die Visualisierung mit all ihren Elementen ausschließlich in SPS-typischen IEC-61131-Progammiersprachen entwickelt wird. Entsprechend können die Visualisierung und das SPS-Programm mit demselben Engineering-Verfahren und bevorzugt demselben Engineering-Werkzeug erstellt werden. Entsprechend ist die erstellte Visualisierung unabhängig von SPS-Typ und -Hersteller und kann in derselben Echtzeitumgebung laufen, wie das eigentliche Steuerprogramm für die SPS.

Gemäß einem ersten allgemeinen Gesichtspunkt der Erfindung wird ein computerimplementiertes Verfahren zur Realisierung einer Visualisierung für eine, mindestens eine speicherprogrammierbare Steuerung, SPS, umfassende, automatisierungstechnische Anlage bereitgestellt. Die automatisierungstechnische Anlage kann eine Anlage oder Maschine mit mindestens einer SPS sein.

Das Verfahren umfasst den Schritt der Bereitstellung eines IEC-61131-Frameworks, nachfolgend kurz als "Framework" bezeichnet. Das Framework ist ausgebildet, mehrere Funktionsbausteine bereitzustellen, mittels derer ein Visualisierungsprogramm in mindestens einer IEC-61131-3-konformen Programmiersprache für die Visualisierung einer, mindestens eine SPS umfassenden, automatisierungstechnischen Anlage erstellbar ist. Vorstehend wurde bereits erwähnt, dass Funktionsbausteine vorprogrammierte Bausteine bzw. Module darstellen, die eine bestimmte Funktionalität bereitstellen.

Die mehreren Funktionsbausteine umfassen einen Server-Baustein zur Erzeugung eines Servers zum Datenaustausch von Visualisierungsdaten mit einem Client. Die mehreren Funktionsbausteine umfassen ferner mehrere Visualisierungselemente, die jeweils unterschiedliche Visualisierungsfunktionen bereitstellen. Die mehreren Visualisierungselemente können beispielhaft zumindest eines der folgenden Visualisierungselemente umfassen: ein Betätigungselement, z. B. ein Buttonelement, ein Kontrollkästchen (engl. checkbox), ein Listenelement, und ein Tabellenelement. Derartige Visualisierungselemente als programmtechnische Visualisierungsbausteine sind an sich bekannt, um eine Visualisierung aus einzelnen Visualisierungselementen modulartig aufzubauen. Die mehreren Funktionsbausteine umfassen ferner einen Strukturdatentyp zur Bereitstellung einer Datenstruktur zum Datenaustausch zwischen den Visualisierungselementen und dem Serverbaustein und/oder zwischen den instanziierten Visualisierungselementen und dem Server. Der Strukturdatentyp stellt somit im instanziierten Zustand eine Datenstruktur bereit, die in vorbestimmter Weise automatisiert die Datenkommunikation zwischen den instanziierten Visualisierungselementen und dem Server ermöglicht. Unter einer Instanziierung der Funktionsbausteine wird deren programmtechnische Umsetzung beim Starten des Visualisierungsprogramms in einer Echtzeit-Laufzeitumgebung verstanden.

Das erfindungsgemäße Verfahren bietet den besonderen Vorzug, dass die Visualisierung mit all ihren Elementen ausschließlich in einer oder mehreren SPS-typischen IEC 61131-Progammiersprachen entwickelt wird. Die Visualisierung wird entsprechend mit demselben Engineering-Verfahren erstellt wie die Programmierung der SPS (SPS-Programm). Die auf diese Weise erstelle Visualisierung ist somit unabhängig von dem eingesetzten SPS-Engineering-Werkzeug.

Das Verfahren umfasst ferner den Schritt der Bereitstellung eines Clients, der zur Datenkommunikation mit dem durch das Visualisierungsprogramm aus dem Server-Baustein erzeugten Server ausgebildet ist. Der Client ist ferner ausgebildet, vom Server empfangene Visualisierungsdaten zu interpretieren und ein graphisches Anzeigen einer Visualisierung zu bewirken. Das Verfahren umfasst ferner den Schritt der Bereitstellung eines Kommunikationsprotokolls zum Datenaustausch zwischen dem Client und dem über das Visualisierungsprogramm erzeugten Server.

Durch das Bereitstellen des Servers, des Clients und des Kommunikationsprotokolls wird eine ganzheitliche Visualisierungstechnik bereitgestellt, d. h. es ist nur mit den verfahrensgemäß bereitgestellten Komponenten möglich, eine vollwertige Visualisierung zu erstellen. Ein fehlerhaftes Anzeigen der Visualisierung und/oder Inkompatibilitäten können ferner zuverlässig vermieden werden, da der bereitgestellte Client, das Kommunikationsprotokoll und der aus dem Server-Baustein erzeugte Server aufeinander abgestimmt sind. Das aus der Praxis bekannte Problem durch die Verwendung unterschiedlicher Web-Browser bei dem eingangs beschriebenen web-basierten Ansatz wird vermieden.

In einer Ausführungsform ist das Framework ausgebildet, das Visualisierungsprogramm ausschließlich in der mindestens einen IEC-61131-konformen Programmiersprache zu erstellen. Anders ausgedrückt ist das Framework ausgebildet, die Visualisierung ausschließlich in SPS-typischen IEC-61131-3 Programmiersprachen zu entwickeln. Gemäß einem weiteren Aspekt kann das Framework ausgebildet sein, zur IEC-61131-konformen Programmierung eines Steuerungsprogramms für SPSen ausgebildet zu sein. Das Framework kann somit als Programmiergerüst ausgebildet sein, mittels dessen und/oder mittels derer sowohl ein Steuerungsprogramm für SPSen als auch das Visualisierungsprogramm für die automatisierungstechnische Anlage mit mindestens einer SPS realisierbar sind. Die Visualisierung und das Steuerungsprogramm für die SPS (SPS-Programm) können somit mit demselben Engineering-Verfahren und demselben Engineering-Werkzeug erstellt werden. Dadurch kann der Engineering-Aufwand reduziert werden.

Gemäß einem weiteren Aspekt kann das erstellbare und/oder erstellte Visualisierungsprogramm in einer IEC-61131-Echtzeit-Laufzeitumgebung ausführbar sein und/oder ausgeführt werden. Das mittels des Frameworks erstellbare oder erstellte Visualisierungsprogramm und ein Steuerungsprogramm für die SPS (SPS-Programm) können zusammen in der gleichen IEC-61131-Echtzeit-Laufzeitumgebung, vorzugsweise der IEC-61131-Echtzeit-Laufzeitumgebung der SPS, ausgeführt werden und/oder ausführbar sein. Entsprechend wird für die Visualisierung vorteilhaft keine separate Laufzeitumgebung (engl. runtime environment) benötigt.

In einer Ausführungsform ist der Server-Baustein dazu ausgebildet, bei Instanziierung einen Server zu erzeugen, der einen UDP/IP- und einen TCP/IP-Socket aufweist und zum Datenaustausch von Visualisierungsdaten mit einem Client über die vom Strukturdatentyp bereitgestellte Datenstruktur ausgebildet ist.

In einer weiteren Ausführungsform basiert das bereitgestellte Kommunikationsprotokoll zum Datenaustausch zwischen dem Client und dem über das Visualisierungsprogramm erzeugten Server auf einer TCP/IP-Kommunikation und den Normen der Reihe IEC 60870-5 und -6. Ferner kann das bereitgestellte Kommunikationsprotokoll ein Anfrage- (engl. Request-)basiertes Protokoll sein, wobei der Client vorzugsweise dazu ausgebildet ist, eine Anfrage, beispielsweise zum Lesen von Informationen für die Visualisierung und/oder zum Schreiben von Benutzereingaben, an den Server zu übermitteln und wobei der Server vorzugsweise dazu ausgebildet ist, auf die Anfrage mit einer positiven oder negativen Bestätigung zu antworten und mittels eines oder mehrerer Telegramme angefragte Daten zu übermitteln und/oder Anfragen zu empfangen. Ferner kann die Möglichkeit bestehen, einen Datenaustausch serverseitig aus zu starten. Hierzu kann der Server ein Event an den Client senden, ohne vorher eine Anfrage erhalten zu haben. Der Client antwortet hierauf mit einer (positiven oder negativen) Bestätigung. Das bereitgestellte Kommunikationsprotokoll zum Datenaustausch zwischen dem Client und dem Server kann somit ein namenloses Protokoll sein, das nur für den vorliegenden Zweck zum Datenaustausch zwischen dem Client und dem Server betreffend die Visualisierung verwendet wird. Entsprechend kann das Protokoll für die Visualisierung optimiert sein. Hierdurch kann die benötigte Bandbreite (schmaler Datenkanal) reduziert werden und die Effizienz gesteigert werden.

In einer weiteren Ausführungsform umfasst das Verfahren das Bereitstellen eines Datenmodells, welches festlegt, wie die einzelnen Visualisierungselemente mit ihren die graphische Darstellung der Visualisierungselemente spezifizierenden Attributen (Metadaten), wie beispielsweise ein Text, eine Textfarbe, eine Textausrichtung, eine Hintergrundfarbe, in Telegramme abgebildet werden, welche mittels des Kommunikationsprotokolls zum Datenaustausch von Visualisierungsdaten verwendet werden. Das Kommunikationsprotokoll kann somit das Datenmodell nutzen.

Gemäß einem weiteren Aspekt kann bei Ausführung des Visualisierungsprogramms die Datenstruktur des Strukturdatentyps pro Visualisierung nur einmal instanziiert werden und im instanziierten Zustand als Eingangs-Ausgangsvariable, sog. INOUT-Variable, an alle Funktionsbausteininstanzen der zu verknüpfenden Visualisierungselemente übergeben werden. Entsprechend kann dadurch die Datenkommunikation zwischen den Visualisierungselementen und dem Server vereinfacht werden.

Gemäß einem weiteren Aspekt kann der Client ausschließlich dazu ausgebildet sein, eine Datenkommunikation mit dem über das Visualisierungsprogramm erzeugten Server durchzuführen, um vom Server empfangene Visualisierungsdaten zu interpretieren, ein graphisches Anzeigen einer Visualisierung zu bewirken und/oder eine über die Visualisierung ermöglichte Benutzerinteraktion zu erfassen und Informationen hierzu an den Server zu übermitteln. Der Client hat vorzugsweise keine andere Funktion. Der Client verwendet somit zur Anzeige der Visualisierung vorzugsweise keine HTML oder JAVA-basierte Technologie. Die Visualisierung kann mittels des Clients zu jeder Zeit und auf jedem Gerät mit Hilfe des Clients aufgerufen und dargestellt werden. Der Client kann ferner dazu ausgebildet sein, wahlweise Visualisierungen mehrerer SPSen und/oder mehrerer automatisierungstechnischer Anlagen anzuzeigen. Entsprechend können mehrere Visualisierungen von mehreren SPSen von einem Client gleichzeitig dargestellt werden. Der Client kann ein reiner software-basierter Client sein, der auf eine Anzeigeeinrichtung, die einen Bildschirm aufweist, ausgeführt ist. Alternativ kann der Client kann auch als eine Vorrichtung ausgeführt sein, die eine Anzeigeeinrichtung mit einem Bildschirm aufweist, z. B. ein Tablet-Computer.

Gemäß einem zweiten allgemeinen Gesichtspunkt wird eine Vorrichtung zur Datenverarbeitung bereitgestellt, die Mittel zur Ausführung des Verfahrens, wie es in diesem Dokument beschrieben ist, umfasst.

Gemäß einem weiteren allgemeinen Gesichtspunkt wird ein System zur Datenverarbeitung bereitgestellt, umfassend eine Vorrichtung zur Datenverarbeitung, die ausgebildet ist, das IEC-611-31-Framework gemäß einem Verfahren, wie es in diesem Dokument beschrieben ist, bereitzustellen. Alternativ oder zusätzlich kann das System einen Server umfassen, der durch eine Instanziierung eines Server-Bausteins eines bereitgestellten IEC-611-31-Frameworks, wie es hier beschrieben ist, erzeugt ist. Alternativ oder zusätzlich kann das System einen Client umfassen, der zur Datenkommunikation mit dem Server ausgebildet ist, und der ausgebildet ist, vom Server empfangene Visualisierungsdaten zu interpretieren und ein graphisches Anzeigen einer Visualisierung zu bewirken.

Gemäß einem weiteren allgemeinen Gesichtspunkt wird ein Computerprogramm bereitgestellt und beansprucht, umfassend Befehle, die bei der Ausführung des Programms durch einen Computer diesen veranlassen, das Verfahren, wie es in diesem Dokument beschrieben ist, auszuführen. Gemäß einem weiteren allgemeinen Gesichtspunkt wird computerlesbares Speichermedium bereitgestellt, umfassend Befehle, die bei der Ausführung durch einen Computer diesen veranlassen, das Verfahren, wie es in diesem Dokument beschrieben ist, auszuführen. Gemäß einem weiteren allgemeinen Gesichtspunkt wird ein Datenträgersignal bereitgestellt und beansprucht, das das Computerprogramm überträgt.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines IEC-61131-Frameworks und eines daraus erzeugten Visualisierungsprogramms zur Illustration eines Verfahrens gemäß einer Ausführungsform;
- Figur 2:: eine schematische Darstellung eines Visulisierungsprogramms gemäß einer Ausführungsform der Erfindung;
- Figur 3:: eine schematische Darstellung eines Servers und des Datenaustausches mit dem Client gemäß einer Ausführungsform der Erfindung; und
- Figur 4:: eine schematische Darstellung einer Visualisierung sowie einer Darstellung, die illustriert, dass das Visualisierungsprogramm und ein SPS-Programm zusammen in einer Echtzeit-Laufzeitumgebung ablaufen gemäß einer Ausführungsform.

Gleiche oder funktional äquivalente Elemente sind in allen Figuren mit denselben Bezugszeichen beschrieben und zum Teil nicht gesondert beschrieben.

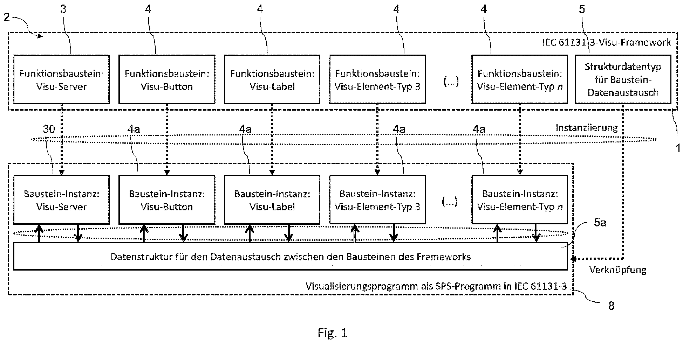

Figur 1 zeigt eine schematische Darstellung eines IEC-61131-Frameworks 1 und eines daraus erzeugten Visualisierungsprogramms 8 gemäß einer Ausführungsform. Das IEC-61131-Framework 1 (nachfolgend kurz als Framework 1 bezeichnet) kann auch als Programmiergerüst bezeichnet werden. Das Framework 1 stellt ein Programmiergerüst da, welches für den Entwickler (Programmierer) einer Visualisierung für eine SPS oder einer automatisierungstechnischen Anlage mit einer SPS einen vorprogrammierten Rahmen und software-basiertes Entwicklungswerkzeug bereitstellt, innerhalb dessen dieser eine anwendungsspezifische zu der Norm IEC 61131-3 konforme Programmierung der Visualisierung und vorzugsweise auch des Steuerungsprogramms der SPS erstellen kann.

Einzelne Funktionen, Elemente und Bausteine sind bereits im Framework 1 enthalten oder vorprogrammiert, die in diesem Dokument als Funktionsbausteine bezeichnet sind.

Eine Visualisierung wird ausschließlich in einer oder mehreren der IEC 61131-Programmiersprachen durch Instanziierung der in dem Framework 1 enthaltenen Bausteine und Strukturen und durch anschließende Verknüpfung dieser, erstellt, was in Figur 1 dargestellt ist.

So ist das Framework 1 insbesondere ausgebildet, mehrere Funktionsbausteine 2 bereitzustellen, mittels derer ein Visualisierungsprogramm 8 in mindestens einer IEC-61131-konformen Programmiersprache für die Visualisierung einer automatisierungstechnischen Anlage erstellbar ist, die eine oder mehrere SPSen aufweist.

Die mehreren Funktionsbausteine 2 umfassen einen Server-Baustein 3 zur Erzeugung eines Servers 30 zum Datenaustausch von Visualisierungsdaten mit einem Client. Der Server-Baustein 3 stellt somit ein vorprogrammiertes Programmmodul dar, welches für ein Visualisierungsprogramm 8 verwendet werden kann. Aus dem Server-Baustein 3 wird beim Ablauf des Visualisierungsprogramms 8 in einer Echtzeit-Laufzeitumgebung ein Server 30 instanziiert. Der Server ist zum Austausch von Visualisierungsdaten 32 mit einem Client (in Figur 1 nicht dargestellt) ausgebildet und kann entsprechend auch als "Visu-Server" bezeichnet werden. Der Client kann analog als "Visu-Client" bezeichnet werden.

Die Funktionsbausteine 2 umfassen ferner mehrere Visualisierungselemente 4 zur Bereitstellung einer Visualisierungsfunktion. Hierbei kann es sich um Programmmodule bzw. -bausteine für an sich bekannte Visualisierungselemente handeln, wie z. B. ein Schaltflächenelement, ein Buttonelement, ein Kontrollkästchen, ein Listenelement, oder ein Tabellenelement etc., die für das Erstellen einer graphischen Benutzerschnittstelle der Visualisierung entsprechend ausgewählt und kombiniert werden können und mit entsprechenden Steuerungsfunktionen- und/oder Daten der SPS verknüpft werden können. Soll die Visualisierung lediglich beispielhaft u.a. ein Kontrollkästchen anzeigen, kann der Entwickler diese Funktionalität anhand des Visualisierungselements "Kontrollkästchen" bereitstellen, ohne diese Funktionalität von Grund auf neu programmieren zu müssen. Das Framework 1 stellt somit bausteinartig typische grafische Bausteine zur Realisierung einer Visualisierung für SPSen und entsprechend gesteuerte Maschinen dar.

Aus den für das Visualisierungsprogramm 8 ausgewählten Visualisierungselementen 4 entstehen dann beim Ablaufen des Visualisierungsprogramms 8 in einer Echtzeit-Laufzeitumgebung entsprechende Instanzen 4a dieser Visualisierungselemente 4.

Die Funktionsbausteine 2 umfassen ferner einen Strukturdatentyp 5 zur Bereitstellung einer Datenstruktur zum Datenaustausch zwischen den instanziierten Visualisierungselementen 4 und dem Server 30. Aus dem Strukturdatentyp 5 entsteht beim Ablaufen des Visualisierungsprogramms 8 eine Instanz 5a, die die Datenstruktur für den Datenaustausch zwischen den Bausteinen des Frameworks, die für das Visualisierungsprogramm 8 genutzt werden, bereitstellt.

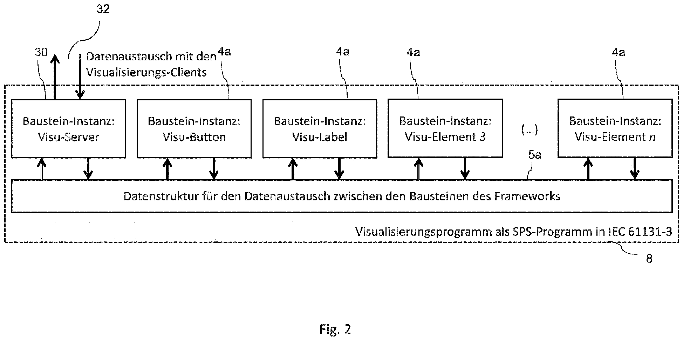

Die Verknüpfung der instanziierten Visualisierungselemente 4a untereinander und mit dem Server 30 erfolgt über diese Datenstruktur 5a zum Datenaustausch zwischen den Visualisierungselementen 4a und zum Datenaustausch mit dem Server 30, was in Figur 2 nochmals vergrößert dargestellt ist.

Figur 2 zeigt eine schematische Darstellung eines Visulisierungsprogramms 8, das wie ein herkömmliches Steuerungsprogramm für die SPS in einer IEC_61131-konformen Laufzeitumgebung für SPS-Programme abläuft. Die Datenstruktur 5a wird pro Visualisierung nur einmal instanziiert und dann als INOUT-Variable (vergleichbar mit einer sog. Call-By-Reference-Parameterübergabe) an alle Funktionsbausteininstanzen 4a der zu verknüpfenden Visualisierungselemente 4 übergeben.

Alle bereitgestellten Funktionsbausteine und damit die Visualisierung mit all ihren Elementen sind ausschließlich in IEC 61131-Programmiersprachen entwickelt. Dies bietet den Vorzug, dass ein Entwickler, der sowohl die Steuerung der SPS in einer IEC 61131-Programmiersprache entwickelt als auch die Visualisierung hierfür, keine zwei Engineering-Verfahren und keine zwei Engineering-Werkzeuge für die Erstellung der SPS Programme und der Visualisierungsprogramme benötigt. Der IEC-61131-3-Programmierer, der ein SPS-Programm entwickelt, kann mit diesen Kenntnissen auch die Visualisierung entwickeln. Gemäß dem Framework 1 können somit Visualisierungen erstellt werden, die unabhängig von SPS-Typ und -Hersteller sind bzw. lassen sich Visualisierungen erstellen, die unabhängig von dem eingesetzten SPS-Engineering-Werkzeug, mit dem sie erstellt wurden, lauffähig sind, so lange die Echtzeit-Laufzeitumgebung IEC 61131-konfom ist.

Ferner können nun das Visualisierungsprogramm 8 und Steuerungsprogramm für eine SPS zusammen im IEC-61131-Echtzeit-Laufzeitsysem ablaufen. Es wird keine separate Laufzeitumgebung benötigt. Das Visualisierungsprogramm 8, da es in einer IEC 61131-Programmiersprache entwickelt ist, ist wie ein normales SPS-Programm in einer IEC 61131-konformen Laufzeitumgebung lauffähig. Das Visualisierungsprogramm 8 kann daher auch als Visualisierungs-SPS-Programm bezeichnet werden.

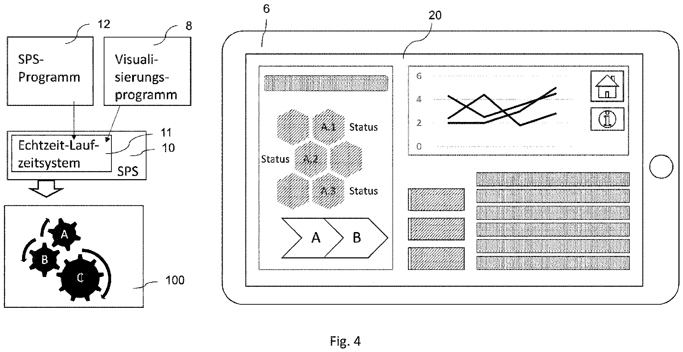

Dies ist auf der linken Seite der Figur 4 illustriert, die schematisch eine durch eine SPS 10 gesteuerte automatisierungstechnische Anlage 100 zeigt, wobei in der IEC-61131-Laufzeitumgebung 11 der SPS sowohl das Steuerprogramm 12 der SPS 10 als auch das mittels des Frameworks 1 erzeugte Visualisierungsprogramm 8 läuft. Auf der rechten Seite der Figur 4 ist ein Client 6, der hier lediglich beispielhaft als Tablet-Computer ausgebildet ist, dargestellt, der die vom Visualisierungsprogramm 8 erzeugte Visualisierung 20 der Steuerung 10 der automatisierungstechnischen Anlage 100 darstellt.

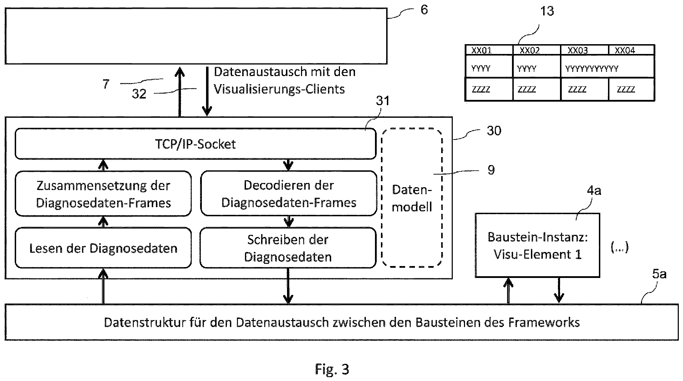

Figur 3 zeigt ein schematisches Blockdiagramm des Servers 30 und illustriert den Datenaustausch des Servers 30 mit dem Client 6 gemäß einer Ausführungsform.

Bei dem Client 6 handelt es sich um eine schlanke Computeranwendung, welche lediglich die über die Kommunikation mit dem Visualisierungs-SPS-Programm 8 empfangenen Daten interpretiert und als Visualisierung graphisch darstellt und Benutzerinteraktionen aufnimmt und an den Server übermittelt. Der bidirektionale Datenaustausch zwischen Server 30 und Client 6 erfolgt über eine TCP/IP-Kommunikation. Hierfür wird ein namenloses, ausschließlich für den Zweck des Datenaustausches von SPS-Visualisierungsdaten entwickeltes Kommunikationsprotokoll 7 verwendet. Das Kommunikationsprotokoll 7 basiert auf der TCP/IP-Kommunikation und den Normen der Reihe IEC 60870-5 und -6. Das Kommunikationsprotokoll 7 ist Anfrage-basierend (Request-basierend): Der Client 6 sendet eine Anfrage (Request) (z. B. zum Lesen von Informationen für die Visualisierung, zum Schreiben von Benutzereingaben, etc.) an den Server 30, dieser bestätigt die Anfrage (den Request) dann mit einer (positiven oder negativen) Bestätigung (Confirmation), sendet in einem oder mehreren weiteren Telegrammen 13 (in Figur 3 nur schematisch dargestellt) die angeforderten Daten und sendet zum Abschluss noch ein Termination-Telegramm. Es existiert aber auch die Möglichkeit einen Datenaustausch von Server-Seite aus zu starten, hierzu sendet der Server 30 eine Ereignis-Anfrage (Event) an den Client, ohne vorher einen Request erhalten zu haben. Der Client antwortet hierauf mit einer (positiven oder negativen) Bestätigung (Confirmation).

Für den Aufbau der Visualisierungsdaten wird ein Datenmodell 30 bereitgestellt. Hierin ist definiert wie die einzelnen Visualisierungselemente (Buttons, Label, Checkboxen, Listen, Tabellen, etc.) mit ihren Attributen (Metadaten) (Text, Textfarbe, Textausrichtung, Hintergrundfarbe, etc.) in den Telegrammen 13, die zwischen Client 6 und Server 30 ausgetauscht werden, abgebildet werden. Das Framework 1 stellt für den Datenaustausch zwischen Client 6 und Server 30 ein eigenes Kommunikationsprotoll 7 bereit sowie einen zugehörigen Client 6, der nur dafür ausgebildet ist, die vom Server 30 empfangenen Visualisierungsdaten zu interpretieren und anzuzeigen. Entsprechend muss nicht auf vorhandene Technologien wie HTML5 und Standard Web-Browser zurückgegriffen werden. Framework 1, Kommunikationsprotokoll 7 und Client 6 sind als eine fest zusammengehörende Einheit zu sehen. Hierdurch kann sichergestellt werden, dass die Visualisierung zu jeder Zeit und auf jedem Gerät mit Hilfe des Clients aufgerufen und dargestellt werden kann. Dies wäre bei Verwendung vorhandener Technologien so nicht sicherstellbar, wie eingangs beschrieben wurde. Des Weiteren ist es möglich, dass mehrere Visualisierungen von mehreren SPSen in einem Client gleichzeitig dargestellt werden.

Es wird betont, dass selbstverständlich unterschiedliche Implementierungen des Frameworks 1, des Kommunikationsprotokolls 7 und des Clients 6 möglich sind, so lange das Framework 1 eine Visualisierung mit all ihren Elementen ausschließlich in einer SPS-typischen IEC-61131-Progammierspra-che erzeugt und das Framework 1, das Kommunikationsprotokoll 7 und der Client 6 aufeinander abgestimmt sind. Letzteres bedeutet, dass der aus dem Framework 1 erzeugte Server 30 und der Client 6 beide das Kommunikationsprotokoll 7 zum Datenaustausch 32 nutzen und der Client entsprechend programmtechnisch eingerichtet ist, die Visualisierungsdaten richtig zu interpretieren, z. B. unter Verwendung des Datenmodells 9.

Zusammengefasst wird somit vorliegend eine ganzheitliche Visualisierungstechnik bereitgestellt, bei der die Visualisierung mit all ihren Elementen ausschließlich in SPS-typischen IEC-61131-Progammiersprachen entwickelt wird. Entsprechend können die Visualisierung und das SPS-Programm mit demselben Engineering-Verfahren und demselben Engineering-Werkzeug erstellt werden. Entsprechend ist die erstellte Visualisierung unabhängig von SPS-Typ und -Hersteller und kann in derselben Echtzeitumgebung laufen, wie das eigentliche Steuerprogramm für die SPS.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: IEC- 61131-Framework
- 2: Funktionsbausteine
- 3: Server-Baustein
- 3a: Server
- 4: Visualisierungselement
- 4a: Instanziiertes Visualisierungselement
- 5: Strukturdatentyp
- 5a: Instanziierte Datenstruktur
- 6: Client
- 7: Kommunikationsprotokoll
- 8: Visualisierungsprogramm
- 9: Datenmodell
- 10: Speicherprogrammierbare Steuerung, SPS
- 11: IEC- 61131-Echtzeit-Laufzeitumgebung
- 12: Steuerungsprogramm für eine SPS
- 13: Telegramm
- 20: Visualisierung
- 30: Server
- 31: UDI/IP- und TCP/IP-Socket
- 32: Datenaustausch
- 100: Automatisierungstechnische Anlage

## Patentansprüche

1. Computerimplementiertes Verfahren zur Realisierung einer Visualisierung (20) für eine, mindestens eine speicherprogrammierbare Steuerung (10), SPS, umfassende, automatisierungstechnische Anlage (100), umfassend die Schritte:
a) Bereitstellung eines IEC- 61131-Frameworks (1), wobei das Framework (1) ausgebildet ist, mehrere Funktionsbausteine (2) bereitzustellen, mittels derer ein Visualisierungsprogramm (8) in mindestens einer IEC-61131-konformen Programmiersprache für die Visualisierung einer, mindestens eine SPS umfassenden, automatisierungstechnischen Anlage erstellbar ist,
wobei die mehreren Funktionsbausteine (2) umfassen:
a1) einen Server-Baustein (3) zur Erzeugung eines Servers (30) zum Datenaustausch von Visualisierungsdaten mit einem Client,
a2) mehrere Visualisierungselemente (4) zur Bereitstellung einer Visualisierungsfunktion, und
a3) einen Strukturdatentyp (5) zur Bereitstellung einer Datenstruktur zum Datenaustausch zwischen den instanziierten Visualisierungselementen (4) und dem Server (30);
b) Bereitstellung eines Clients (6), der zur Datenkommunikation mit dem durch das Visualisierungsprogramm aus dem Server-Baustein (3) erzeugten Server (30) ausgebildet ist, und der ausgebildet ist, vom Server (30) empfangene Visualisierungsdaten zu interpretieren und ein graphisches Anzeigen einer Visualisierung (20) zu bewirken; und
c) Bereitstellung eines Kommunikationsprotokolls (7) zum Datenaustausch (32) zwischen dem Client (6) und dem über das Visualisierungsprogramm erzeugten Server (30).

2. Verfahren nach Anspruch 1, wobei das Framework (1) ausgebildet ist, das Visualisierungsprogramm (8) ausschließlich in der mindestens einen IEC-61131-konformen Programmiersprache zu erstellen.

3. Verfahren nach Anspruch 1 oder 2, wobei das Framework (1)
a) zur IEC-61131-konformen Programmierung eines Steuerungsprogramms (12) für SPSen (10) ausgebildet ist; und/oder
b) als Programmiergerüst ausgebildet ist, mittels dessen/ derer sowohl ein Steuerungsprogramm (12) für SPSen (10) als auch das Visualisierungsprogramm (8) für die automatisierungstechnische Anlage (100) mit mindestens einer SPS (10) realisierbar sind.

4. Verfahren nach einem der vorherigen Ansprüche, wobei das erstellbare und/oder erstellte Visualisierungsprogramm (8) in einer IEC-61131-Echtzeit-Laufzeitumgebung (11) ausführbar ist und/oder ausgeführt wird.

5. Verfahren nach einem der vorherigen Ansprüche wobei das mittels des Frameworks (1) erstellbare oder erstellte Visualisierungsprogramm (8) und ein SPS-Steuerungsprogramm (12) für die SPS (10) zusammen in der gleichen IEC-61131-Echtzeit-Laufzeitumgebung (11), vorzugsweise der IEC-61131-Echtzeit-Laufzeitumgebung (11) der SPS (10), ausgeführt werden und/oder ausführbar sind.

6. Verfahren nach einem der vorherigen Ansprüche, wobei der Server-Baustein (3) dazu ausgebildet ist, bei Instanziierung einen Server (30) zu erzeugen, der einen UDP/IP- und einen TCP/IP-Socket (31) aufweist und zum Datenaustausch von Visualisierungsdaten mit einem Client über die vom Strukturdatentyp (5) bereitgestellte Datenstruktur ausgebildet ist.

7. Verfahren nach einem der vorherigen Ansprüche, wobei das bereitgestellte Kommunikationsprotokoll (7) zum Datenaustausch (32) zwischen dem Client (6) und dem über das Visualisierungsprogramm (8) erzeugten Server (30)
a) auf einer TCP/IP-Kommunikation und den Normen der Reihe IEC 60870-5 und -6 basiert; und/oder
b) ein Anfrage (engl. Request)-basiertes-Protokoll ist, wobei der Client (6) dazu ausgebildet ist, eine Anfrage, beispielsweise zum Lesen von Informationen für die Visualisierung und/oder zum Schreiben von Benutzereingaben, an den Server zu übermitteln und wobei der Server dazu ausgebildet ist, auf die Anfrage mit einer positiven oder negativen Bestätigung zu antworten und mittels eines oder mehrere Telegramme (12) angefragte Daten zu übermitteln und/oder Anfragen zu empfangen.

8. Verfahren nach einem der vorherigen Ansprüche, ferner umfassend das Bereitstellen eines Datenmodells (9), welches festlegt, wie die einzelnen Visualisierungselemente (4) mit ihren die graphische Darstellung der Visualisierungselemente spezifizierenden Attributen, wie beispielsweise ein Text, eine Textfarbe, eine Textausrichtung, eine Hintergrundfarbe, in einem Telegramm abgebildet werden, welches mittels des Kommunikationsprotokolls zum Datenaustausch von Visualisierungsdaten verwendet wird.

9. Verfahren nach einem der vorherigen Ansprüche, wobei zur bei Ausführung des Visualisierungsprogramms die Datenstruktur des Strukturdatentyps pro Visualisierung nur einmal instanziiert wird und im instanziierten Zustand als Eingangs-Ausgangsvariable, INOUT-Variable, an alle Funktionsbausteininstanzen der zu verknüpfenden Visualisierungselemente übergeben wird.

10. Verfahren nach einem der vorherigen Ansprüche, wobei der Client (6)
a) ausschließlich dazu ausgebildet ist, eine Datenkommunikation mit dem über das Visualisierungsprogramm (8) erzeugten Server durchzuführen, um vom Server empfangene Visualisierungsdaten zu interpretieren, ein graphisches Anzeigen einer Visualisierung (20) zu bewirken und/oder eine über die Visualisierung (20) ermöglichte Benutzerinteraktion zu erfassen und Informationen hierzu an den Server zu übermitteln; und/oder
b) zur Anzeige der Visualisierung keine HTML oder JAVA-basierte Technologie verwendet; und/oder
c) dazu ausgebildet ist, wahlweise Visualisierungen mehrerer SPSen und/oder mehrerer automatisierungstechnischer Anlagen anzuzeigen.

11. Verfahren nach einem der vorherigen Ansprüche, wobei die mehreren Visualisierungselemente (4) zumindest eines der folgenden Visualisierungselemente umfassen: ein Betätigungselement, z. B. ein Buttonelement, ein Kontrollkästchen, ein Listenelement, und ein Tabellenelement.

12. System zur Datenverarbeitung, umfassend
a) eine Vorrichtung zur Datenverarbeitung, die ausgebildet ist, das IEC-611-31-Framework gemäß einem Verfahren der vorherigen Ansprüche bereitzustellen;
b) einen Server (30), der durch eine Instanziierung eines Server-Bausteins eines gemäß einem Verfahren der vorherigen Ansprüche bereitgestellten IEC-611-31-Frameworks erzeugt ist, und;
c) einen Client (6), der zur Datenkommunikation mit dem Server (30) ausgebildet ist, und der ausgebildet ist, vom Server empfangene Visualisierungsdaten zu interpretieren und ein graphisches Anzeigen einer Visualisierung zu bewirken.

13. Computerprogramm, umfassend Befehle, die bei der Ausführung des Programms durch einen Computer diesen veranlassen, das Verfahren nach einem der Ansprüche 1 bis 11 auszuführen.

14. Computerlesbares Speichermedium, umfassend Befehle, die bei der Ausführung durch einen Computer diesen veranlassen, das Verfahren nach einem der Ansprüche 1 bis 11 auszuführen.

15. Datenträgersignal, das das Computerprogramm nach Anspruch 13 überträgt.

## Claims

1. Computer-implemented method for implementation of a visualization (20) for an automation plant (100) comprising at least one programmable logic controller (10), PLC, comprising the steps:
a) providing an IEC-61131 framework (1), wherein the framework (1) is configured to provide a plurality of function blocks (2) by means of which a visualization program (8) can be created in at least one IEC-61131-compliant programming language for the visualization of an automation plant comprising at least one PLC, wherein the plurality of function blocks (2) comprises:
a1) a server block (3) for generating a server (30) for data exchange of visualization data with a client,
a2) a plurality of visualization elements (4) for providing a visualization function, and
a3) a struct data type (5) for providing a data structure for data exchange between the instantiated visualization elements (4) and the server (30);
b) providing a client (6) which is configured for data communication with the server (30) generated by the visualization program from the server block (3), and which is configured to interpret visualization data received from the server (30) and to effect a graphical display of a visualization (20); and
c) providing a communication protocol (7) for data exchange (32) between the client (6) and the server (30) generated via the visualization program.

2. Method according to claim 1, wherein the framework (1) is configured to create the visualization program (8) exclusively in the at least one IEC-61131-compliant programming language.

3. Method according to claim 1 or 2, wherein the framework (1)
a) is configured for IEC-61131-compliant programming of a control program (12) for PLCs (10); and/or
b) is configured as a programming framework by means of which both a control program (12) for PLCs (10) and the visualization program (8) for the automation plant (100) with at least one PLC (10) can be implemented.

4. Method according to any one of the preceding claims, wherein the creatable and/or created visualization program (8) is executable and/or is executed in an IEC-61131 real-time runtime environment (11).

5. Method according to any one of the preceding claims, wherein the visualization program (8) creatable or created by means of the framework (1) and a PLC control program (12) for the PLC (10) are executed and/or are executable together in the same IEC-61131 real-time runtime environment (11), preferably the IEC-61131 real-time runtime environment (11) of the PLC (10).

6. Method according to any one of the preceding claims, wherein the server block (3) is configured to generate, upon instantiation, a server (30) which has a UDP/IP and a TCP/IP socket (31) and is configured for data exchange of visualization data with a client via the data structure provided by the struct data type (5).

7. Method according to any one of the preceding claims, wherein the provided communication protocol (7) for data exchange (32) between the client (6) and the server (30) generated via the visualization program (8)
a) is based on a TCP/IP communication and the standards of the IEC 60870-5 and -6 series; and/or
b) is a request-based protocol, wherein the client (6) is configured to transmit a request, for example for reading information for the visualization and/or for writing user inputs, to the server, and wherein the server is configured to respond to the request with a positive or negative acknowledgement and to transmit requested data by means of one or more telegrams (12) and/or to receive requests.

8. Method according to any one of the preceding claims, further comprising providing a data model (9) which defines how the individual visualization elements (4) with their attributes specifying the graphical representation of the visualization elements, such as for example a text, a text colour, a text alignment, a background colour, are mapped in a telegram which is used by means of the communication protocol for data exchange of visualization data.

9. Method according to any one of the preceding claims, wherein during execution of the visualization program the data structure of the struct data type is instantiated only once per visualization and, in the instantiated state, is passed as an input/output variable, INOUT variable, to all function block instances of the visualization elements to be linked.

10. Method according to any one of the preceding claims, wherein the client (6)
a) is configured exclusively to perform data communication with the server generated via the visualization program (8) in order to interpret visualization data received from the server, to effect a graphical display of a visualization (20) and/or to capture a user interaction enabled via the visualization (20) and to transmit information relating thereto to the server; and/or
b) does not use HTML or JAVA-based technology for displaying the visualization; and/or
c) is configured to selectively display visualizations of a plurality of PLCs and/or a plurality of automation plants.

11. Method according to any one of the preceding claims, wherein the plurality of visualization elements (4) comprises at least one of the following visualization elements:
an actuating element, e.g. a button element, a checkbox, a list element, and a table element.

12. System for data processing, comprising
a) a device for data processing, which is configured to provide the IEC-61131 framework according to a method of the preceding claims;
b) a server (30), which is generated by an instantiation of a server block of an IEC-61131 framework provided according to a method of the preceding claims; and
c) a client (6) which is configured for data communication with the server (30) and which is configured to interpret visualization data received from the server and to effect a graphical display of a visualization.

13. Computer program comprising instructions which, when the program is executed by a computer, cause the computer to carry out the method according to any one of claims 1 to 11.

14. Computer-readable storage medium comprising instructions which, when executed by a computer, cause the computer to carry out the method according to any one of claims 1 to 11.

15. Data carrier signal which transmits the computer program according to claim 13.

## Revendications

1. Procédé mis en œuvre par ordinateur pour la mise en œuvre d'une visualisation (20) pour une installation d'automatisation (100) comprenant au moins un automate programmable (10), API, comprenant les étapes :
a) mise à disposition d'un cadriciel IEC-61131 (1), dans lequel le cadriciel (1) est configuré pour mettre à disposition une pluralité de blocs fonctionnels (2), au moyen desquels un programme de visualisation (8) peut être créé dans au moins un langage de programmation conforme à l'IEC-61131 pour la visualisation d'une installation d'automatisation comprenant au moins une API,
dans lequel la pluralité de blocs fonctionnels (2) comprend :
a1) un bloc serveur (3) pour la création d'un serveur (30) pour l'échange de données de visualisation avec un client,
a2) une pluralité d'éléments de visualisation (4) pour la mise à disposition d'une fonction de visualisation, et
a3) un type de données structuré (5) pour la mise à disposition d'une structure de données pour l'échange de données entre les éléments de visualisation instanciés (4) et le serveur (30) ;
b) mise à disposition d'un client (6), qui est configuré pour la communication de données avec le serveur (30) créé par le programme de visualisation à partir du bloc serveur (3), et qui est configuré pour interpréter les données de visualisation reçues du serveur (30) et provoquer un affichage graphique d'une visualisation (20) ; et
c) mise à disposition d'un protocole de communication (7) pour l'échange de données (32) entre le client (6) et le serveur (30) créé via le programme de visualisation.

2. Procédé selon la revendication 1, dans lequel le cadriciel (1) est configuré pour créer le programme de visualisation (8) exclusivement dans le au moins un langage de programmation conforme à l'IEC-61131.

3. Procédé selon la revendication 1 ou 2, dans lequel le cadriciel (1)
a) est configuré pour la programmation conforme à l'IEC-61131 d'un programme de contrôle (12) pour des API (10) ; et/ou
b) est configuré comme cadriciel de programmation, au moyen duquel peuvent être mis en œuvre à la fois un programme de contrôle (12) pour API (10) et le programme de visualisation (8) pour l'installation d'automatisation (100) avec au moins une API (10).

4. Procédé selon l'une des revendications précédentes, dans lequel le programme de visualisation (8) pouvant être créé et/ou créé est exécutable et/ou est exécuté dans un environnement d'exécution temps réel IEC-61131 (11).

5. Procédé selon l'une des revendications précédentes, dans lequel le programme de visualisation (8) pouvant être créé ou créé au moyen du cadriciel (1) et un programme de contrôle API (12) pour l'API (10) sont exécutés ensemble et/ou sont exécutables dans le même environnement d'exécution temps réel IEC-61131 (11), de préférence l'environnement d'exécution temps réel IEC-61131 (11) de l'API (10).

6. Procédé selon l'une des revendications précédentes, dans lequel le bloc serveur (3) est configuré pour créer lors de l'instanciation un serveur (30) qui possède un socket UDP/IP et un socket TCP/IP (31) et est configuré pour l'échange de données de visualisation avec un client via la structure de données mise à disposition par le type de données structuré (5).

7. Procédé selon l'une des revendications précédentes, dans lequel le protocole de communication (7) mis à disposition pour l'échange de données (32) entre le client (6) et le serveur (30) créé via le programme de visualisation (8)
a) est basé sur une communication TCP/IP et les normes de la série IEC 60870-5 et -6 ; et/ou
b) est un protocole basé sur des requêtes, dans lequel le client (6) est configuré pour transmettre une requête, par exemple pour lire des informations pour la visualisation et/ou pour écrire des entrées utilisateur, au serveur et dans lequel le serveur est configuré pour répondre à la requête avec un accusé de réception positif ou négatif et pour transmettre des données demandées au moyen d'un ou plusieurs télégrammes (12) et/ou pour recevoir des requêtes.

8. Procédé selon l'une des revendications précédentes, comprenant en outre la mise à disposition d'un modèle de données (9), qui définit comment les éléments de visualisation individuels (4) avec leurs attributs spécifiant la représentation graphique des éléments de visualisation, tels que par exemple un texte, une couleur de texte, un alignement du texte, une couleur d'arrière-plan, sont mappés dans un télégramme, qui est utilisé au moyen du protocole de communication pour l'échange de données de visualisation.

9. Procédé selon l'une des revendications précédentes, dans lequel lors de l'exécution du programme de visualisation la structure de données du type de données structuré n'est instanciée qu'une seule fois par visualisation et dans l'état instancié est transmise comme variable d'entrée-sortie, variable INOUT, à toutes les instances de blocs fonctionnels des éléments de visualisation à relier.

10. Procédé selon l'une des revendications précédentes, dans lequel le client (6)
a) est exclusivement configuré pour effectuer une communication de données avec le serveur créé via le programme de visualisation (8), pour interpréter les données de visualisation reçues du serveur, provoquer un affichage graphique d'une visualisation (20) et/ou de capturer une interaction utilisateur rendue possible via la visualisation (20) et de transmettre des informations à ce sujet au serveur ; et/ou
b) n'utilise pas de technologie basée sur HTML ou JAVA pour l'affichage de la visualisation ; et/ou
c) est configuré pour afficher sélectivement des visualisations de plusieurs API et/ou de plusieurs installations d'automatisation.

11. Procédé selon l'une des revendications précédentes, dans lequel la pluralité d'éléments de visualisation (4) comprend au moins l'un des éléments de visualisation suivants : un élément d'actionnement, par exemple un élément bouton, une case à cocher, un élément de liste, et un élément de tableau.

12. Système de traitement de données, comprenant
a) un dispositif de traitement de données, qui est configuré pour mettre à disposition le cadriciel IEC-611-31 selon un procédé des revendications précédentes ;
b) un serveur (30), qui est créé par une instanciation d'un bloc serveur d'un cadriciel IEC-611-31 mis à disposition selon un procédé des revendications précédentes ; et
c) un client (6), qui est configuré pour la communication de données avec le serveur (30), et qui est configuré pour interpréter les données de visualisation reçues du serveur et provoquer un affichage graphique d'une visualisation.

13. Programme informatique, comprenant des instructions qui, lors de l'exécution du programme par un ordinateur, amènent celui-ci à exécuter le procédé selon l'une des revendications 1 à 11.

14. Support de stockage lisible par ordinateur, comprenant des instructions qui, lors de l'exécution par un ordinateur, amènent celui-ci à exécuter le procédé selon l'une des revendications 1 à 11.

15. Signal de porteuse de données, qui transmet le programme informatique selon la revendication 13.
